# EUROPÄISCHE PATENTSCHRIFT

(11) **EP 1 317 879 B1**
(45) Veröffentlichungstag und Bekanntmachung des Hinweises auf die Patenterteilung: **27.12.2006**
(21) Anmeldenummer: 02102627.3
(22) Anmeldetag: 22.11.2002
(51) Int. Cl.: A01D 45/02

(54) **Maschine zum Mähen von stängelartigem Erntegut**
Machine for mowing stalk crops
Machine pour faucher des plantes à tiges

(30) Priorität: 05.12.2001 DE 10159729; 18.05.2002 DE 10222310
(43) Veröffentlichungstag der Anmeldung: 11.06.2003
(73) Patentinhaber: Maschinenfabrik Kemper GmbH & Co. KG, 48703 Stadtlohn (DE)
(72) Erfinder: Wübbels, Richard, 46414, Rhede (DE)
(74) Vertreter: Holst, Sönke

(56) Entgegenhaltungen:
- EP-A- 0 099 527
- EP-A- 0 760 200
- EP-A- 0 824 856
- EP-A- 1 008 291
- EP-A- 1 010 363
- EP-A- 1 234 494
- DE-A- 19 939 168
- DE-A- 19 953 521
- US-A- 3 736 733
- US-A- 5 237 804

## Beschreibung

Die Erfindung betrifft eine Maschine zum Mähen von stängelartigem Erntegut, mit mehreren seitlich nebeneinander angeordneten Einzugs- und Mäheinrichtungen zum Abschneiden und Fördern des Ernteguts, von denen bezüglich der Fahrtrichtung seitlich einer Längsmittelebene der Maschine eine innere Einzugs- und Mäheinrichtung und eine zweite, ihr benachbarte, nächstäußere Einzugs- und Mäheinrichtung angeordnet sind, wobei die zweite Einzugs- und Mäheinrichtung derart antreibbar ist, dass sie abgeschnittenes Erntegut zunächst nach außen und dann nach hinten fördert und eine Umlenkfördereinheit mit leicht nach vorn geneigter Drehachse den vertikalen Abstand zwischen der Arbeitsebene der Einzugs- und Mäheinrichtungen und der Ebene des Einzugskanals einer Erntemaschine überbrückt.

In der DE 39 09 754 A ist ein Erntegerät zum Einbringen von Halmfutter beschrieben, bei dem vier rotierende Schneidscheiben seitlich nebeneinander angeordnet sind. Das abgeschnittene Gut wird an ihren Rückseiten von einer Querförderschnecke übernommen. Auf den beiden Seiten der Längsmittelebene drehen sich die Schneidscheiben jeweils gleichsinnig, wobei das Gut zuerst nach außen und dann nach hinten gefördert wird.

Die DE 199 53 521 A zeigt eine Schneid- und Fördervorrichtung für stängeliges Halmgut, die vier seitlich nebeneinander angeordnete Schneid- und Förderrotoren aufweist. Der Drehsinn der Schneid- und Förderrotoren ist so, dass das Gut zuerst nach innen und dann nach hinten gefördert wird.

In der EP 0 508 189 A und US 5 237 804 A wird eine Maschine zum Mähen von Mais beschrieben, bei der beidseits der Längsmittelebene je zwei Einzugs- und Mähtrommeln angeordnet sind. Die inneren Einzugs- und Mähtrommeln drehen sich derart, dass das Gut zunächst nach außen und dann nach hinten gefördert wird. Die äußeren Einzugs- und Mähtrommeln drehen sich dazu gegensinnig.

In der EP 0 760 200 A ist eine Maschine zum Mähen von stängelartigem Erntegut offenbart, bei der mehrere Einzugs- und Mähtrommeln über die Arbeitsbreite verteilt sind. Das Gut wird an der Rückseite der Einzugs- und Mähtrommeln entlang der Rückwand nach innen transportiert. Auf den beiden Seiten der Längsmittelebene drehen sich die Einzugs- und Mähtrommeln mit Ausnahme der äußeren Einzugs- und Mähtrommeln jeweils gleichsinnig, so dass das Gut zuerst nach außen und dann nach hinten gefördert wird. Diese Drehrichtung ermöglicht die Verwendung von Querfördertrommeln im Zwickelbereich benachbarter Einzugs- und Mähtrommeln. Den inneren Einzugs- und Mähtrommeln wird das Gut von den weiter außen angeordneten Einzugs- und Mähtrommeln durch Querfördertrommeln zugeführt. Sie übergeben dieses Gut, dem das von ihnen geerntete Gut hinzukommt, den Schrägfördertrommeln, welche es nach oben und hinten in den Einzugskanal des Feldhäckslers fördern. Im Bereich hinter der inneren Einzugs- und Mähtrommeln kann es zu Förderproblemen kommen.

Die Einzugs- und Mähtrommeln in der EP 1 008 291 A drehen sich mit demselben Drehsinn wie die in der EP 0 760 200 A. Die Querförderung wird jedoch hinter den Einzugs- und Mähtrommeln durch einen separaten, von den Einzugs- und Mähtrommeln getrennten Querförderer bewerkstelligt.

Schließlich wird in der Figur 10 der GB 2 012 154 A eine Maiserntemaschine gezeigt, bei der beidseits der Längsmittelebene jeweils zwei Aufnahmetrommeln angeordnet sind. Die äußeren Aufnahmetrommeln drehen sich nach außen, die inneren Aufnahmetrommeln nach innen. An ihrer Rückseite wird das Erntegut durch einen Gurtförderer nach innen zur Mitte der Maschine gefördert und dann nach hinten in den Einzugskanal eines Häckslers umgelenkt.

Die in der EP 0 760 200 A offenbarte Maschine hat dadurch, dass die Querfördertrommeln mit den Einzugs- und Mähtrommeln zusammenwirken, den Vorteil einer kurzen Bauweise, sodass der sie tragende Feldhäcksler nur ein relativ geringes Drehmoment aufnehmen muss. Die Maschinen gemäß DE 39 09 754 A, DE 199 53 521 A, EP 1 008 291 A und GB 2 012 154 A sind wegen der unabhängig von den Einzugs- und Mähtrommeln wirkenden Querförderer wesentlich länger und belasten den Feldhäcksler stärker. Die Bauform gemäß EP 0 508 189 A ist für Arbeitsbreiten, wie sie mit den zuvor genannten Maschinen erzielt werden, nur eingeschränkt geeignet.

Die der Erfindung zugrunde liegende Aufgabe wird darin gesehen, bei einer kompakten Maschine zum Mähen von stängelartigem Erntegut den Gutfluss zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf eine Maschine zum Mähen von stängelartigem Erntegut, bei der bezüglich der Fahrtrichtung seitlich einer Längsmittelebene wenigstens eine innere Einzugs- und Mäheinrichtung und eine nach außen folgende, gegenüber der inneren Einzugs- und Mäheinrichtung nach außen versetzte zweite Einzugs- und Mäheinrichtung nebeneinander angeordnet sind. Die zweite Einzugs- und Mäheinrichtung wird beim Betrieb der Maschine derart in Drehung versetzt, dass ihre in Fahrtrichtung vorlaufende Seite sich nach außen bewegt. Das geerntete Gut wird somit von der zweiten Einzugs- und Mäheinrichtung zuerst nach außen und dann nach hinten gefördert. Die innere Einzugs- und Mäheinrichtung bewegt sich demgegenüber gegensinnig. Das von ihr geerntete Gut wird somit zunächst nach innen und dann nach hinten gefördert. Das Gut von beiden Einzugs- und Mäheinrichtungen wird anschließend wird es durch eine Umlenkfördereinheit mit leicht nach vorn geneigter Drehachse nach oben und hinten in den Einzugskanal der nachfolgenden Erntemaschine gefördert. Die Umlenkfördereinheit ist vorzugsweise eine Schrägfördertrommel, die vorzugsweise mit übereinander angeordneten Förderscheiben versehen ist, über deren Umfang Mitnehmer verteilt sind. Denkbar wäre aber auch die Verwendung eines mit Zugmitteln (Ketten oder Riemen) ausgestatteten endlosen Förderers als Umlenkfördereinheit. Eine angetriebene Querfördereinrichtung fördert das Gut von der zweiten Einzugs- und Mäheinrichtung zur Umlenkfördereinheit.

Auf diese Weise wirkt die erste, innere Einzugs- und Mäheinrichtung wegen ihrer Drehrichtung nicht als Förderer für das von weiter außen eintreffende Gut. Die erfindungsgemäße Maschine hat einen wesentlich verbesserten Gutfluss. Durch die Drehrichtung der zweiten Einzugs- und Mäheinrichtung kann die vorteilhafte Querförderung unter Verwendung von Querfördertrommeln, wie sie aus der EP 0 760 200 A bekannt ist, beibehalten werden. Beim Reversieren zur Beseitigung einer Verstopfung arbeiten die inneren Einzugs- und Mäheinrichtungen erheblich aggressiver, da sie immer in der entsprechenden Förderrichtung mitlaufen.

Vorzugsweise wird das von der zweiten Einzugs- und Mäheinrichtung bereitgestellte Gut durch einen Förderkanal in Richtung auf den Einzugskanal der nachgeschalteten Erntemaschine zu gefördert. Dieser Förderkanal ist aufgrund der gewählten Drehrichtungen unabhängig von der davor angeordneten inneren Einzugs- und Mäheinrichtung und wird beispielsweise durch eine Wand von ihr getrennt.

In diesem Förderkanal ist vorzugsweise die angetriebene Querfördereinrichtung angeordnet, welche das Gut von der zweiten Einzugs- und Mäheinrichtung der Umlenkfördereinheit zufördert. Die Querfördereinrichtung ist vorzugsweise eine Querfördertrommel mit etwa vertikaler Drehachse, obwohl auch die Verwendung eines endlosen, mit Zugmitteln (Ketten bzw. Riemen) ausgestatteten Förderers möglich wäre. Da die Querfördereinrichtung den Gutfluss nicht an die innere Einzugs- und Mäheinrichtung übergeben und auch kein Gut aus ihr herausfördern muss, kann sie an einer Position angebracht werden, in der eine optimale Gutübergabe von der zweiten Einzugs- und Mäheinrichtung auf die Querfördereinrichtung möglich ist. Die Übergabe des Guts von der Querfördereinrichtung zur Umlenkfördereinheit kann aufgrund der erfindungsgemäßen Antriebsrichtung der inneren Einzugs- und Mäheinrichtung optimal gestaltet werden, da in diesem Bereich keine Pflanzen von vorn einlaufen. Die Umlenkfördereinheit übernimmt das Gut direkt von der Querfördereinrichtung, d.h. ohne Mitwirkung der inneren Einzugs- und Mähtrommel. Denkbar wäre auch, die Querfördereinrichtung und die Umlenkfördereinheit in einem einzigen Förderer zu integrieren. Dieser kann als einzige, relativ große Fördertrommel oder als Endlosförderer ausgeführt sein. Zweckmäßigerweise sind die angetriebenen Elemente der Querfördereinrichtung in Fahrtrichtung hinter dem Förderkanal angeordnet. Der Förderkanal wird in dieser Ausführungsform nach vorn durch eine Wand begrenzt, an deren gegenüberliegender Seite die innere Einzugs- und Mäheinrichtung angeordnet ist. Denkbar wäre jedoch auch eine umgekehrte Anordnung, bei der die angetriebenen Elemente der Querfördereinrichtung vor dem Förderkanal liegen.

Die Umlenkfördereinheit dient vorzugsweise auch zum Transport des Guts von der inneren Einzugs- und Mäheinrichtung. Sie übernimmt das Gut vorzugsweise stromab des Übernahmebereichs des Guts von zweiten Einzugs- und Mäheinrichtung (in der Regel von der Querfördereinrichtung), sodass die beiden Übergabebereiche an die Umlenkfördereinheit voneinander unabhängig sind.

Zur Vergrößerung der Arbeitsbreite der Maschine bietet es sich an, außen eine äußere Einzugs- und Mäheinrichtung anzuordnen, die derart angetrieben wird, dass das Gut zunächst nach innen und dann nach hinten gefördert wird. Dort vereinigt sich der Gutstrom mit dem Gutstrom einer weiter innen angeordneten, gegensinnig angetriebenen Einzugs- und Mäheinrichtung. Die Arbeitsbreite kann zusätzlich oder alternativ durch weitere Einzugs- und Mähtrommeln vergrößert werden, die gegenüber der zweiten Einzugs- und Mäheinrichtung nach außen versetzt und derart antreibbar sind, dass sie abgeschnittenes Erntegut zunächst nach außen und dann nach hinten fördern. Das Gut wird durch die Rückseiten der Einzugs- und Mäheinrichtungen nach innen gefördert. Im Zwickelbereich zwischen derart angetriebenen Einzugs- und Mäheinrichtungen kann eine Querfördertrommel angeordnet sein.

Um in Fahrtrichtung hinter der inneren Einzugs- und Mäheinrichtung hinreichend Platz für den Förderkanal und die zugehörige Querfördereinrichtung zu bekommen, bietet es sich an, die innere Einzugs- und Mäheinrichtung gegenüber der zweiten Einzugs- und Mäheinrichtung in Fahrtrichtung nach vorn zu versetzen. Dadurch können sich lange Pflanzen in der Mitte der Maschine besser ablegen, was die Kolbenverluste reduziert.

Schließlich bleibt anzumerken, dass die Maschine vorzugsweise symmetrisch zur Längsmittelebene aufgebaut ist. Dann sind zwei innere Einzugs- und Mäheinrichtungen in der Mitte der Maschine angeordnet, die zwischen sich Pflanzen einziehen. Pflanzen, die genau zwischen den beiden inneren Einzugs- und Mäheinrichtungen stehen, werden problemlos geschnitten und gefördert. Die Pflanzen und Kolbenverluste in der Mitte sind geringer, da die mittleren zwei Pflanzenreihen nicht mehr so stark wie im Stand der Technik umgelenkt werden. Die innere Einzugs- und Mäheinrichtung kann bei bestimmten Ausführungsformen gegenüber der Längsmittelebene der Maschine beliebig weit seitlich versetzt sein, insbesondere wenn die Maschine eine ungerade Anzahl an Einzugs- und Mäheinrichtungen aufweist.

In den Zeichnungen sind drei nachfolgend näher beschriebene Ausführungsbeispiele der Erfindung dargestellt. Es zeigt:
- Fig. 1: eine Draufsicht auf eine erfindungsgemäße Maschine zum Mähen von stängelartigem Erntegut,
- Fig. 2: einen Querschnitt durch die in Figur 1 dargestellte Maschine entlang der Linie 2-2,
- Fig. 3: eine Maschine mit gegenüber der in Figur 1 gezeigten Ausführungsform vergrößerter Arbeitsbreite, und
- Fig. 4: eine vergrößerte Draufsicht auf den mittleren Bereich einer dritten Ausführungsform einer Maschine zum Mähen von stängelartigem Erntegut.

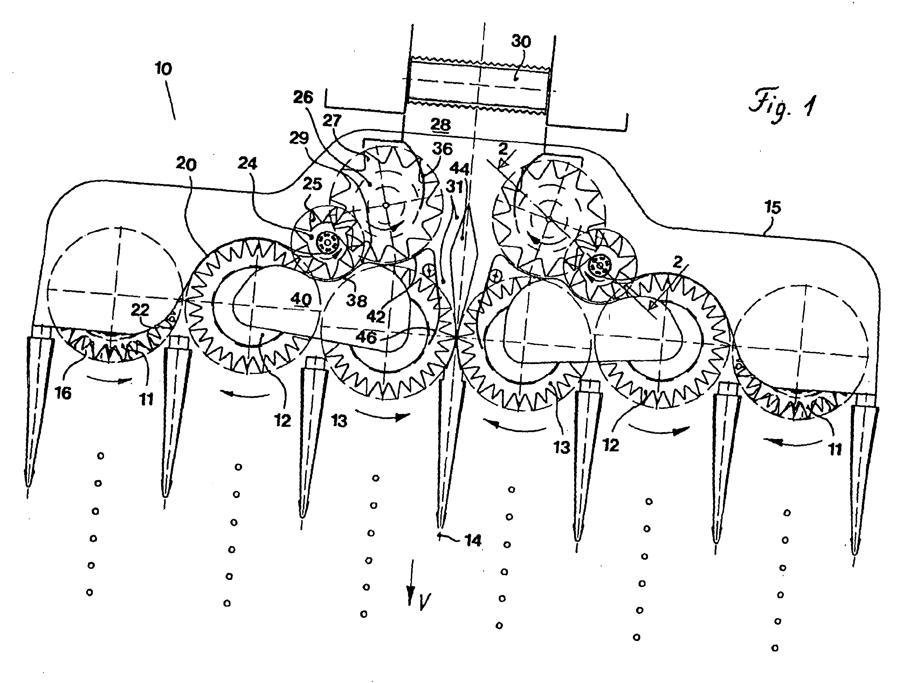

Die in Figur 1 dargestellte Maschine 10 zum Mähen von stängelartigem Erntegut weist sechs als Einzugs- und Mäheinrichtungen dienende Einzugs- und Mähtrommeln 11, 12 und 13 auf, die symmetrisch zu einer Längsmittelebene 14 der Maschine 10 angeordnet sind. Auf beiden Seiten der Längsmittelebene 14 sind je drei Einzugs- und Mähtrommeln 11, 12, 13 vorhanden. Die Maschine 10 wird von einem Rahmen 15 getragen. Im Folgenden beziehen sich Richtungsangaben, wie vorn, hinten, außen, innen und seitlich auf die Fahrtrichtung V der Maschine 10.

Die reihenunabhängig arbeitenden Einzugs- und Mähtrommeln 11, 12, 13 sind aus einer unteren Schneidscheibe 16, die um eine etwa vertikal verlaufende Achse rotiert, und koaxial darüber angeordneten Förderscheiben zusammengesetzt, deren Umfang mit taschenförmigen Aussparungen ausgestattet ist. Die Schneidscheiben 16 trennen die oberen Teile des Ernteguts von den im Boden verbleibenden Stoppeln ab. Die Stängel des Ernteguts, bei dem es sich insbesondere um Mais handelt, werden in den taschenförmigen Aussparungen der Förderscheiben aufgenommen und festgehalten. Anstelle aller oder einiger der dargestellten rotierenden Einzugs- und Mäheinrichtungen können auch Einzugs- und Mäheinrichtungen verwendet werden, die auf endlosen Förderern basieren.

Den Einzugs- und Mähtrommeln 11, 12, 13 sind Halmteiler 18 vorgeordnet. Zwischen der Rückseite der Einzugs- und Mähtrommeln 11, 12, 13 und einer in ihrer Form an die Einzugs- und Mähtrommeln 12 angepassten Rückwand 20 der Maschine 10 ist ein Querförderkanal gebildet, durch den das von den Einzugs- und Mähtrommeln 11, 12, 13 abgeerntete Gut seitlich zur Mitte der Maschine 10 transportiert wird.

Die beiden äußeren Einzugs- und Mähtrommeln 11 werden derart in Drehung versetzt, dass das geerntete Gut zunächst seitlich in Richtung auf die Längsmittelebene 14 zu und dann entgegen der Fahrtrichtung V der Maschine 10 nach hinten gefördert wird. Dort wird das Erntegut von der nächstinneren Einzugs- und Mähtrommel 12 übernommen. Diese Einzugs- und Mähtrommel 12 dreht sich gegensinnig zu der benachbarten äußeren Einzugs- und Mähtrommel 11, so dass sie das geerntete Gut zunächst seitlich nach außen und anschließend nach hinten fördern. An ihrer der äußeren Einzugs- und Mähtrommel 11 zugewandten Seite übernimmt die Einzugs- und Mähtrommel 12 das Erntegut von der äußeren Einzugs- und Mähtrommel 11. Ein Ausnehmer 22, der aus in den Hüllkreis der äußeren Einzugs- und Mähtrommel 11 eingreifenden Blechen aufgebaut ist und das Erntegut aus ihren taschenförmigen Aussparungen aushebt, bewirkt den Übergang des Ernteguts auf die Einzugs- und Mähtrommel 12, an deren Rückseite das Erntegut im Zusammenwirken mit der Rückwand 20 nach innen in Richtung auf die Längsmittelebene 14 zu gefördert wird.

Anschließend wird das Erntegut durch einen - nicht eingezeichneten - Ausnehmer aus den taschenförmigen Aussparungen der Einzugs- und Mähtrommel 12 herausgehoben und von einer dahinter angeordneten, rotierenden Querfördertrommel 24 mit etwa vertikaler Drehachse übernommen, die als Querfördereinrichtung dient. Die Querfördertrommel 24 ist aus einem zylindrischen Körper mit daran übereinander befestigten Förderscheiben aufgebaut, um deren Umfang Mitnehmer 25 zur Förderung des Guts verteilt sind. Die Mitnehmer 25 weisen eine in Drehrichtung vorlaufende Oberfläche auf, die entgegen der Drehrichtung gekrümmt ist. Ihr Förderverhalten ist daher abweisend. Anstelle der zahnartigen Mitnehmer 25 können auch Finger verwendet werden. Der stromauf liegende Bereich der Querfördertrommel 24 durchdringt Schlitze in der Rückwand 20. Die Rückwand 20 endet in der Nähe des zylindrischen Körpers der Querfördertrommel 24.

Der Hüllkreis der Querfördertrommel 24 taucht in den Hüllkreis der Einzugs- und Mähtrommel 12 ein. Die Querfördertrommel 24 fördert das Gut an einer in Fahrtrichtung V vor ihr liegenden festen (oder gegen eine Kraft beweglichen) Wand 38 entlang, die unterhalb einer die nächstäußere Einzugs- und Mähtrommel 12 und die innere Einzugs- und Mähtrommel 13 überdeckenden Abdeckung 40 angeordnet ist. Dadurch, dass wegen der dort einlaufenden Pflanzen keine Abdeckung (Mitteltisch) zwischen den beiden inneren Einzugs- und Mähtrommeln 13 vorhanden ist, können keine Pflanzen in unerwünschter, zu Verlusten führender Weise auf diesem Mitteltisch mehr liegen bleiben.

Das Gut wird dann von einer als Umlenkfördereinheit dienenden Schrägfördertrommel 26 übernommen, die aus einem zylindrischen Körper mit übereinander angeordneten, gezahnten Förderscheiben aufgebaut ist. Die Schrägfördertrommeln 26 weisen nach vorn geneigte Drehachsen auf und fördern das Erntegut zunächst seitlich nach innen und dann schräg nach hinten und oben in den Einzugskanal 28 des Feldhäckslers mit darin übereinander angeordneten Einzugswalzen 30. Der Hüllkreis der Querfördertrommel 24 und der Hüllkreis der Schrägfördertrommel 26 überdecken sich, um die Übergabe des Guts zu optimieren. Dadurch erreicht man, dass die Querfördertrommeln 26 das Erntegut von den Querfördertrommeln 24 übernehmen, wobei separate Ausnehmer für die Querfördertrommeln 24 nicht erforderlich sind.

Auch die Schrägfördertrommeln 26 wirken mit jeweils einer vor ihnen angeordneten, festen (oder gegen eine Kraft beweglichen) Wand 42 zusammen, die durch ein am Boden der Maschine 10 befestigtes Element gebildet wird, das auch einen Ausnehmer 46 für die inneren Einzugs- und Mähtrommeln 13' bildet. Ein Ausnehmer 36 hebt das Erntegut abgabeseitig aus den Schrägfördertrommeln 26 heraus. Das Umlenken des Ernteguts nach hinten durch die Schrägfördertrommeln 26 kann durch bogenförmige Umlenkkufen, die am Boden der Maschine 10 zwischen den Schrägfördertrommeln 26 angeordnet sind, erleichtert werden.

Die Schrägfördertrommeln 26 sind zum Guttransport mit Mitnehmern 27 versehen. Die in Drehrichtung vorlaufenden Flächen der Mitnehmer 27 der Schrägfördertrommeln 26 sind etwa radial angeordnet, so dass sich eine aggressive Förderwirkung ergibt. Anstelle der zahnartigen Mitnehmer 27 können auch Finger verwendet werden. Denkbar ist auch eine Steuerung der Mitnehmer 25 und/oder 27, die eine radiale Verschiebung und/oder azimutale Drehung der Mitnehmer 25, 27 bewirkt, um die Gutförderung zu verbessern.

Die Querfördertrommel 24 und die Schrägfördertrommel 26 bilden somit einen Förderkanal 29 für das von den äußeren Einzugs- und Mähtrommeln 11, 12 geerntete Gut, der von den inneren Einzugs- und Mähtrommeln 13 getrennt und von ihnen unabhängig ist. Um diesen Förderkanal 29 realisieren zu können, ohne den Gutstrom darin in unerwünschter Weise umlenken zu müssen und ohne die in Fahrtrichtung V gemessene Länge der Maschine 10 zumindest im Bereich der mittleren und äußeren Einzugs- und Mähtrommeln 11, 12 wesentlich zu vergrößern, sind die Drehachsen der inneren Einzugs- und Mähtrommeln 13 gegenüber den anderen Einzugs- und Mähtrommeln 11, 12 in Fahrtrichtung V nach vorn versetzt. Der Antrieb der Einzugs- und Mähtrommeln 11, 12, 13, der Querfördertrommeln 24 und der Schrägfördertrommeln 26 erfolgt mittels geeigneter Getriebe durch den Feldhäcksler.

Die inneren Einzugs- und Mähtrommeln 13 drehen sich gegenüber den nächstäußeren Einzugs- und Mähtrommeln 12 gegensinnig, so dass sie das Gut zunächst nach innen in Richtung auf die Längsmittelebene der Maschine 10 zu und dann nach hinten fördern, wenn die Maschine 10 beim Erntevorgang in Fahrtrichtung V über ein Feld bewegt wird. Das von den inneren Einzugs- und Mähtrommeln geerntete Gut wird durch die Ausnehmer 46 daraus herausgehoben, strömt fast ohne Umlenkung durch einen zwischen einem mittigen, am Boden der Maschine 10 angeordneten, etwa rautenförmigen Führungselement 44 und dem Ausnehmer 46 liegenden Teil eines Kanals 31 und vereinigt sich seitlich neben den Schrägfördertrommeln 26 und geringfügig vor ihren Drehachsen mit dem Gutstrom im Förderkanal 29, der von den äußeren Einzugs- und Mähtrommeln 11, 12 stammt. Anschließend strömt der vereinte Gutstrom weiter geradlinig durch den Teil des Kanals 31, der sich zwischen dem Führungselement 44 und der Schrägfördertrommel 26 befindet, in den Einzugskanal 28 des Feldhäckslers, wo er gehäckselt und auf einem Wagen abgelegt wird.

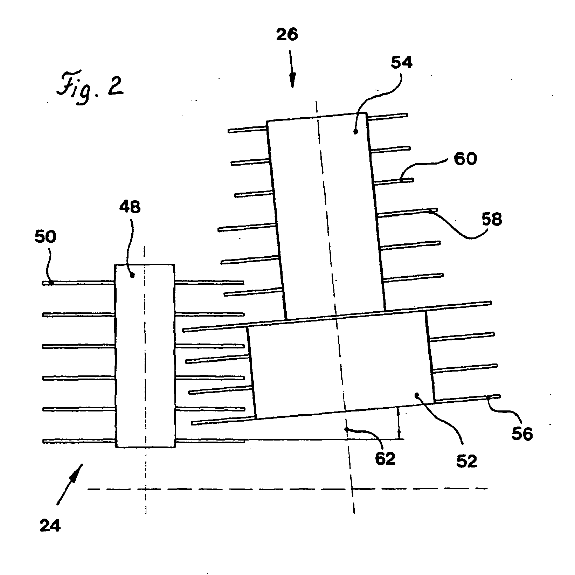

Die Hüllkreise der Förderscheiben der Querfördertrommel 24 und die Hüllkreise der Förderscheiben der Schrägfördertrommel 26 überdecken sich, so dass letztere das Erntegut aus der Querfördertrommel 24 heraushebt. Ein separater Ausnehmer für die Querfördertrommel 24 erübrigt sich. Der in Figur 2 dargestellte Querschnitt durch die Querfördertrommel 24 und die Schrägfördertrommel 26 verdeutlicht ihre Anordnung zueinander und zeigt, dass die Querfördertrommel 24 aus einem zylindrischen Körper 48 und daran befestigten, übereinander angeordneten Förderscheiben 50 aufgebaut ist. Die Schrägfördertrommel 26 weist einen unteren, zylindrischen Körper 52 und einen oberen Körper 54 mit gegenüber dem unteren Körper 52 verringerten Durchmesser auf. An den Körpern 52, 54 sind Förderscheiben 56, 58 und 60 mit sich nach oben stufenweise verringernden Durchmessern angebracht. Die Drehachse 62 der Schrägfördertrommel 26 ist um einen Winkel von etwa 5° zur Querfördertrommel 24 hin geneigt.

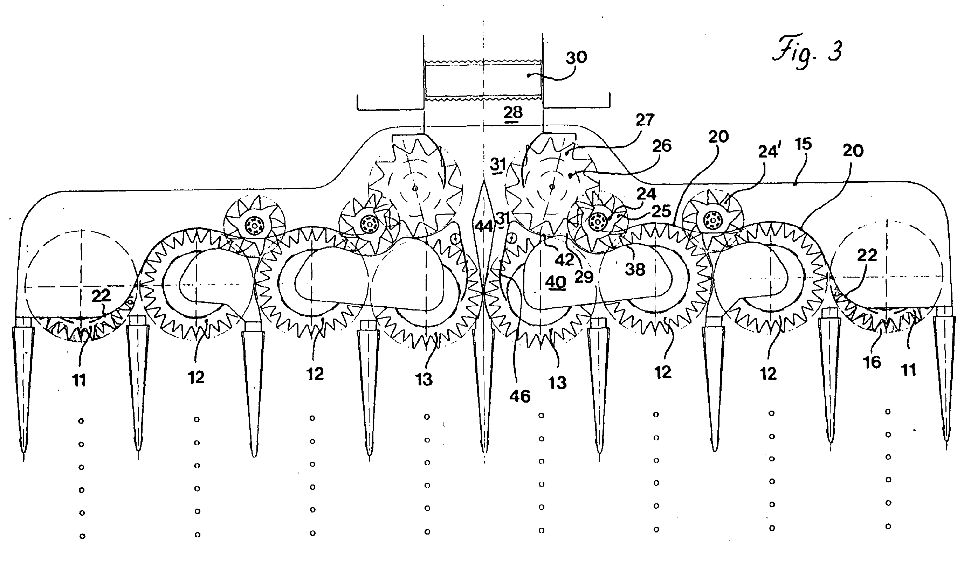

Die dargestellte Ausführungsform kann durch Hinzufügen von Einzugs- und Mähtrommeln 12 und im Zwickelbereich benachbarter Einzugs- und Mähtrommeln 12 angeordneter Querfördertrommeln 24' in Ausführungsformen mit größerer Arbeitsbreite abgewandelt werden, wie in der Figur 3 dargestellt ist.

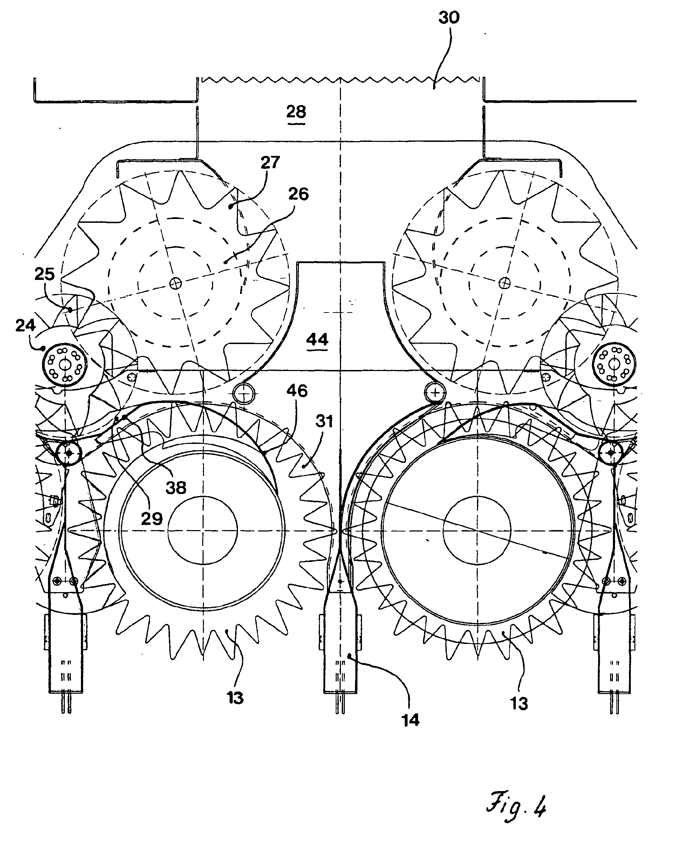

Die Figur 4 zeigt eine Draufsicht auf den mittleren Bereich einer anderen Ausführungsform einer Maschine 10. Den anderen Ausführungsformen entsprechende Elemente sind mit übereinstimmenden Bezugszeichen gekennzeichnet. Während die Einzugs- und Mähtrommeln 11, 12, 13 und die Querfördertrommeln 24 und Schrägfördertrommeln 26 in Aufbau und Anordnung mit den anderen Ausführungsformen überstimmen, sind die Ausnehmer 46 der inneren Einzugs- und Mähtrommeln 13 weiter außen (stromab) angeordnet und die Wände 42 entfallen. Dadurch erreicht man, dass das Gut von den inneren Einzugs- und Mähtrommeln 13 etwa hinter ihrer Drehachse an die Schrägfördertrommeln 26 übergeben wird. Die Übergabe von den inneren Einzugs- und Mähtrommeln 13 an die Schrägfördertrommeln 26 erfolgt stromab der Übergabe von den Querfördertrommeln 24 an die Schrägfördertrommeln 26, die am stromabwärtigen Ende der Wand 38 erfolgt. Die Führungselemente 44 sind verbreitert und erstrecken sich bis in die Zwickelbereiche zwischen den inneren Einzugs- und Mähtrommeln 13 und den Schrägfördertrommeln 26. Bei dieser Ausführungsform verbleibt das von den inneren Einzugs- und Mähtrommeln 13 geerntete Gut in den inneren Einzugs- und Mähtrommeln 13, bis es an ihrer Rückseite von den Schrägfördertrommeln 26 mit ihren aggressiven Mitnehmern 27 übernommen wird. In dieser Ausführungsform wird das Gut in den Förderkanälen 29 und 31 stets aktiv gefördert. Man erhält einen problemlosen Gutfluss. Die Ausnehmer 46 können sich mehr oder weniger weit nach vorn erstrecken, wie anhand der im linken und rechten Teil der Figur 4 gezeigten unterschiedlichen Ausführungsformen erkennbar ist.

## Patentansprüche

1. Maschine (10) zum Mähen von stängelartigem Erntegut, mit mehreren seitlich nebeneinander angeordneten Einzugs- und Mäheinrichtungen (11, 12, 13) zum Abschneiden und Fördern des Ernteguts, von denen bezüglich der Fahrtrichtung seitlich einer Längsmittelebene (14) der Maschine (10) eine innere Einzugs- und Mäheinrichtung (13) und eine zweite, ihr benachbarte, nächstäußere Einzugs- und Mäheinrichtung (12) angeordnet sind, wobei die zweite Einzugs- und Mäheinrichtung (12) derart antreibbar ist, dass sie abgeschnittenes Erntegut zunächst nach außen und dann nach hinten fördert und eine Umlenkfördereinheit (26) mit leicht nach vorn geneigter Drehachse (62) den vertikalen Abstand zwischen der Arbeitsebene der Einzugs- und Mäheinrichtungen (11, 12, 13) und der Ebene des Einzugskanals (28) einer Erntemaschine überbrückt, **dadurch gekennzeichnet, dass** die innere Einzugs- und Mäheinrichtung (13) derart antreibbar ist, dass sie abgeschnittenes Erntegut zunächst nach innen und dann nach hinten fördert, und dass eine Querfördereinrichtung (24) das Erntegut von der zweiten Einzugs- und Mäheinrichtung (12) übernimmt und direkt der Umlenkfördereinheit (26) zuführt.

2. Maschine (10) nach Anspruch 1, **dadurch gekennzeichnet, dass** in Fahrtrichtung (V) hinter der inneren Einzugs- und Mäheinrichtung (13) ein von der inneren Einzugs- und Mäheinrichtung (13) getrennt ausgebildeter Förderkanal (29) zur Förderung des von der zweiten Einzugs- und Mäheinrichtung (12) geernteten Ernteguts in Richtung auf den Einzugskanal (28) der Erntemaschine zu angeordnet ist.

3. Maschine (10) nach Anspruch 1 oder 2, **dadurch gekennzeichnet, dass** zwischen dem Förderkanal (29) und der inneren Einzugs- und Mäheinrichtung (13) eine Wand (38, 42) vorhanden ist.

4. Maschine nach einem der Ansprüche 1 bis 3, **dadurch gekennzeichnet, dass** die Umlenkfördereinheit (26) das Gut von der inneren Einzugs- und Mäheinrichtung (13) stromab des Übernahmebereichs von der zweiten Einzugs- und Mäheinrichtung (12) aufnimmt.

5. Maschine nach einem der Ansprüche 1 bis 4, **gekennzeichnet durch** eine weitere, weiter außen als die zweite Einzugs- und Mäheinrichtung (12) angeordnete äußere Einzugs- und Mäheinrichtung (11, 12), deren Erntegut mittels des rückwärtigen Bereichs der zweiten Einzugs- und Mäheinrichtung (12) gefördert wird.

6. Maschine nach einem der Ansprüche 1 bis 5, **dadurch gekennzeichnet, dass** die innere Einzugs- und Mäheinrichtung (11) gegenüber der zweiten Einzugs- und Mäheinrichtung (12) in Fahrtrichtung nach vorn versetzt ist.

7. Maschine (10) nach einem der Ansprüche 1 bis 6, **dadurch gekennzeichnet, dass** die Maschine (10) symmetrisch zur Längsmittelebene (14) aufgebaut ist.

8. Erntemaschine, insbesondere Feldhäcksler, mit einem Einzugskanal (28), an den eine Maschine (10) nach einem der vorhergehenden Ansprüche angeschlossen ist.

## Claims

1. Machine (10) for mowing stalk-like crop material, with a plurality of intake and mowing arrangements (11, 12, 13) arranged laterally adjacent to one another for cutting and conveying the crop, of which an inner intake and mowing arrangement (13) and a second next outermost intake and mowing arrangement (12) adjacent to it are arranged to the side of a longitudinal central plane (14) of the machine (10) with respect to the travel direction, wherein the second intake and mowing arrangement (12) can be driven in such a way that it firstly conveys cut crop outwards and then to the rear, and a deflecting conveying unit (26) with a rotational axis (62) inclined slightly forwards bridges the vertical distance between the working plane of the intake and mowing arrangements (11, 12, 13) and the plane of the intake channel (28) of a harvesting machine, **characterised in that** the inner intake and mowing arrangement (13) can be driven in such a way that it firstly conveys cut crop inwards and then to the rear, and that a transverse conveying drum (24) takes up the crop from the second intake and mowing arrangement (12) and feeds it directly to the deflecting conveying unit (26).

2. Machine (10) according to Claim 1, **characterised in that** a conveying channel (29) configured separately from the inner intake and mowing arrangement (13) is arranged behind the inner intake and mowing arrangement (13) in the travel direction (V) to convey the crop harvested by the second intake and mowing arrangement (12) towards the intake channel (28) of the harvesting machine.

3. Machine (10) according to Claim 1 or 2, **characterised in that** a wall (38, 42) is arranged between the conveying channel (29) and the inner intake and mowing arrangement (13).

4. Machine according to one of Claims 1 to 3, **characterised in that** the deflecting conveying unit (26) takes up the crop from the inner intake and mowing arrangement (13) downstream of the takeover area of the second intake and mowing arrangement (12).

5. Machine according to one of Claims 1 to 4, **characterised by** a further outer intake and mowing arrangement (11, 12)arranged further to the outside than the second intake and mowing arrangement (12), the crop of which is conveyed by means of the rearward region of the second intake and mowing arrangement (12).

6. Machine according to one of Claims 1 to 5, **characterised in that** the inner intake and mowing arrangement (11) is offset forwards in the travel direction in relation to the second intake and mowing arrangement (12).

7. Machine (10) according to one of Claims 1 to 6, **characterised in that** the machine (10) is configured symmetrically to the longitudinal central plane (14).

8. Harvesting machine, in particular a forage chopper, with an intake channel (28), to which a machine (10) according to one of the preceding claims is connected.

## Revendications

1. Machine (10) pour faucher des plantes à tige, comportant plusieurs dispositifs d'introduction et de fauchage (11, 12, 13) disposés les uns à côté des autres latéralement pour la coupe et le transport du produit de récolte, parmi lesquels sont disposés, relativement au sens de la marche, sur le côté d'un plan médian longitudinal (14) de la machine (10), un dispositif d'introduction et de fauchage interne (13) et un second dispositif d'introduction et de fauchage (12) adjacent, le plus proche en direction de l'extérieur, le second dispositif d'introduction et de fauchage (12) pouvant être entraîné de telle sorte qu'il transporte le produit de récolte coupé tout d'abord vers l'extérieur et ensuite vers l'arrière et une unité de transport à renvoi (26) avec un axe de rotation légèrement incliné vers l'avant (62) comblant l'écart vertical entre le plan de travail des dispositifs d'introduction et de fauchage (11, 12, 13) et le plan du canal d'introduction (28) d'une machine de récolte, **caractérisée en ce que** le dispositif d'introduction et de fauchage interne (13) peut être entraîné de telle sorte qu'il transporte le produit de récolte coupé tout d'abord vers l'intérieur et ensuite vers l'arrière et **en ce qu'**un dispositif de transport transversal (24) reçoit le produit de récolte du second dispositif d'introduction et de fauchage (12) et l'amène directement vers l'unité de transport à renvoi (26).

2. Machine (10) selon la revendication 1, **caractérisée en ce qu'**est disposé, dans le sens de la marche (V), derrière le dispositif d'introduction et de fauchage interne (13), un canal de transport (29) réalisé séparément du dispositif d'introduction et de fauchage interne (13) pour le transport du produit de récolte récolté par le second dispositif d'introduction et de fauchage (12) en direction du canal d'introduction (28) de la machine de récolte.

3. Machine (10) selon la revendication 1 ou 2, **caractérisée en ce qu'**entre le canal de transport (29) et le dispositif d'introduction et de fauchage interne (13), il y a une paroi (38, 42).

4. Machine selon l'une quelconque des revendications 1 à 3, **caractérisée en ce que** l'unité de transport à renvoi (26) reçoit le produit du dispositif d'introduction et de fauchage interne (13), en aval de la zone de réception du second dispositif d'introduction et de fauchage (12).

5. Machine selon l'une quelconque des revendications 1 à 4, **caractérisée par** un autre dispositif d'introduction et de fauchage externe (11, 12), disposé plus loin en direction de l'extérieur que le second dispositif d'introduction et de fauchage (12), dont le produit de récolte est transporté au moyen de la zone arrière du second dispositif d'introduction et de fauchage (12).

6. Machine selon l'une quelconque des revendications 1 à 5, **caractérisée en ce que** le dispositif d'introduction et de fauchage interne (11) est décalé vers l'avant dans le sens de la marche par rapport au second dispositif d'introduction et de fauchage (12).

7. Machine (10) selon l'une quelconque des revendications 1 à 6, **caractérisée en ce que** la machine (10) est construite de manière symétrique par rapport au plan médian longitudinal (14).

8. Machine de récolte, notamment ramasseuse-hacheuse, comportant un canal d'introduction (28) auquel est raccordée une machine (10) selon l'une quelconque des revendications précédentes.
